# EUROPEAN PATENT SPECIFICATION

(11) **EP 4 166 583 B1**
(45) Date of publication and mention of the grant of the patent: **22.04.2026**
(21) Application number: 21821460.9
(22) Date of filing: 20.05.2021
(51) Int. Cl.: C08F 255/00, C09D 5/00, C08L 51/06, C09D 151/06, C09D 11/00, C08F 8/20, C08F 255/04, C08K 5/01, C08K 5/05, C09D 7/20, C09D 11/107, C09D 11/033, C08F 285/00, C09D 11/108, C09J 151/06

(54) **DISPERSION COMPOSITION**
DISPERSIONSZUSAMMENSETZUNG
COMPOSITION DE DISPERSION

(30) Priority: 10.06.2020 JP 2020100691
(43) Date of publication of application: 19.04.2023
(73) Proprietor: Nippon Paper Industries Co., Ltd., Tokyo 114-0002 (JP)
(72) Inventor: KONO, Masaru, Tokyo 114-0002 (JP); KIMURA, Koji, Tokyo 114-0002 (JP); WATANABE, Yasutaka, Tokyo 114-0002 (JP); KOMOTO, Naosuke, Tokyo 114-0002 (JP)
(74) Representative: Müller-Boré & Partner Patentanwälte PartG mbB
(86) International application number: PCT/JP2021/019209
(87) International publication number: WO 2021/251100

(56) References cited:
- WO-A1-2010/018863
- WO-A1-2018/135418
- WO-A1-2020/031916
- WO-A1-2020/071214
- JP-A- 2000 239 602
- JP-A- 2006 233 125
- JP-A- 2007 091 997
- JP-A- 2013 213 110
- JP-A- H06 192 352
- JP-A- H10 204 372
- JP-A- H11 323 236

## Description

### Field

The present invention relates to a dispersion composition, in particular, the dispersion composition that has good stability such as dispersibility and sustainable stability, and can have a high solid content and a low viscosity, as well as to the application thereof.

### Background

Amid the trend to reduce a volatile organic compound (VOC), a shift from a solvent-based ink to a water-based ink is being progressing. On the other hand, an alcohol-based ink, which is considered to have a medium impact to an environment, is being spread more widely. For example, Patent Literature 1 describes that a block copolymer having a certain α-olefin polymer block and an acrylate ester block can be used as an adhesive component of the alcohol-based ink.

WO2020/071214 A1 discloses a dispersion of a (meth)acrylate modified chlorinated polyolefin, wherein the dispersing medium contains solvent composition toluene / cyclohexane / 1-butanol = 76/20/4 (wt%). The dispersion is used for preparation of primers, adhesives, paint or ink binders.

### Citation List

### Patent Literature

Patent Literature 1: Japanese Patent No. 6641281

### Summary

### Technical Problem

However, in order for the alcohol-based ink of the above-mentioned conventional technology to achieve the same level of adhesion as the solvent-based ink (adhesive component: modified polyolefin resin), the adhesive component needs to contain several times the amount of the latter. When a large amount of the adhesive component is added, the viscosity of the ink increases thereby decreasing the dispersibility and sustainable stability thereof, making the ink impractical for an actual use.

An object of the present invention is to provide an alcohol-based composition containing an acryl-modified polyolefin resin that exhibits a good adhesion even at a high solid content, that suppresses an increase in viscosity, and that has good stability such as dispersibility and sustainable stability.

### Solution to Problem

The present invention is defined in appended claims.

### Advantageous Effects of Invention

The present invention provides a dispersion composition having good stability such as dispersibility and sustainable stability, as well as a high solid content and a low viscosity. The dispersion composition is useful as a paint binder, an ink binder, an adhesive, and a primer because this can exhibit a good adhesion to a substrate such as a polyolefin, and also because the coating film thereof formed on the substrate can have a gasohol resistance.

### Brief Description of Drawings

### Description of Embodiments

According to a first embodiment, the present invention provides a dispersion composition at least:
a component (A): a modified polyolefin resin, and
a component (B): a dispersing medium containing an alcohol solvent and an aliphatic hydrocarbon solvent;
wherein:
the component (A) is dispersed in the component (B);
the component (A) is modified by a (meth)acrylic acid component containing at least
a component (C): a (meth)acrylate ester represented by the following general formula (I):

   CH₂=C(R¹)COOR² (I)
(in the general formula (I), R¹ represents a hydrogen atom or a methyl group; and R² represents -CₘH₂ₘOH, where m represents an integer of 1 to 18), and
a component (D): a (meth)acrylate ester represented by the following general formula (II):

   CH₂=C(R³)COOR⁴ (II)
(in the general formula (II), R³ represents a hydrogen atom or a methyl group; and R⁴ represents a linear, a branched and/or a cyclic alkyl group having 4 to 18 carbon atoms); and
a total content of the structure derived from the (meth)acrylic acid component in the dispersion composition is 3% to 94% by weight relative to 100% by weight as a total amount of the component (A) and (meth)acrylic acid component polymer; and
a solid fraction in the dispersion composition is 30% to 80% by weight
the total content of the alcohol solvent and the aliphatic hydrocarbon solvent in the dispersing medium is 80% or more by weight; and
the content ratio (mass ratio) of the alcohol solvent to the aliphatic hydrocarbon solvent is in the range of 99/1 to 10/90.

### (1. Component (A): Modified Polyolefin Resin)

The dispersion composition according to the present invention includes a component (A), a modified polyolefin resin, in a dispersing medium. The component (A), the modified polyolefin resin, is a modified product of a polyolefin resin.

### (1-1. Polyolefin Resin)

Usually, the polyolefin resin is an olefin (α-olefin) polymer. Illustrative examples of the α-olefin include ethylene, propylene, 1-butene, 1-pentene, 1-hexene, 1-heptene, and 1-octene.

The polyolefin resin may be a polymer of one single olefin (α-olefin) or a copolymer of two or more olefins (α-olefins). When the polyolefin resin is a copolymer, the polyolefin resin may be any of a random copolymer and a block copolymer.

From the viewpoint of exhibiting a sufficient adhesion to a nonpolar resin substrate such as a polypropylene substrate, the polyolefin resin is preferably polypropylene (propylene homopolymer), ethylene-propylene copolymer, propylene-1-butene copolymer, and ethylene-propylene-1-butene copolymer.

"Polypropylene" represents the polymer having the composition unit derived from propylene as the basic unit. "Ethylene-propylene copolymer" represents the copolymer whose basic unit includes the composition units derived from ethylene and propylene. "Propylene-1-butene copolymer" represents the copolymer whose basic unit includes the composition units derived from propylene and butene. "Ethylene-propylene-1-butene copolymer" represents the copolymer whose basic unit includes the composition units derived from ethylene, propylene, and butene. These (co)polymers may contain a small amount of other olefin-derived composition unit other than the basic units, as long as the amount thereof does not significantly impair the performance that is intrinsic to the resin.

It is preferable that the polyolefin resin includes 50% or more by mole of the composition unit derived from propylene relative to 100% by mole of the composition units. When the composition unit derived from propylene is included in the above range, the adhesion to a non-polar resin substrate such as a propylene resin can be retained.

When the ethylene-propylene copolymer or the propylene-1-butene copolymer is a random copolymer, the composition unit derived from ethylene or the composition unit derived from butene is preferably in the range of 3% to 50% by mole, and the composition unit derived from propylene is preferably in the range of 50% to 97% by mole, relative to 100% by mole of the composition units.

### (1-2. Modification by (Meth)acrylic Acid Component)

In the present invention, the component (A), the modified polyolefin resin, is the resin that is modified (graft-modified) with (meth)acrylic acid components. The (meth)acrylic acid components mean (meth)acrylic acids and the derivatives thereof such as a (meth)acrylic anhydride and a (meth)acrylate ester.

In the present invention, the (meth)acrylic acid component includes
the component (C): the (meth)acrylate ester (hydroxyl monomer) represented by the following general formula (I):

   CH₂=C(R¹)COOR² (I)
(in the general formula (I), R¹ represents a hydrogen atom or a methyl group; and R² represents -CₘH₂ₘOH, where m represents an integer of 1 to 18).

R¹ represents a hydrogen atom or a methyl group, while this is preferably a hydrogen atom. Here, m represents an integer of 1 to 18, preferably 1 to 16, 1 to 14, 1 to 12, or 1 to 10, more preferably 1 to 8, 1 to 6, or 1 to 4, even more preferably 2 to 4, or 2 to 3, while especially preferably 2.

Illustrative examples of the hydroxyl monomer of the component (C) include 2-hydroxyethyl (meth)acrylate, 2-hydroxypropyl (meth)acrylate, 3-hydroxypropyl (meth)acrylate, 2-hydroxy-1-methylethyl (meth)acrylate, 2-hydroxybutyl (meth)acrylate, 3-hydroxybutyl (meth)acrylate, 4-hydroxybutyl (meth)acrylate, 3-hydroxy-1-methylpropyl (meth)acrylate, 3-hydroxy-2-methylpropyl (meth)acrylate, 2-hydroxy-1-methylpropyl (meth)acrylate, 2-hydroxy-2-methylpropyl (meth)acrylate, 2-hydroxy-1,1-dimethylethyl (meth)acrylate, 2-hydroxypentyl (meth)acrylate, 3-hydroxypentyl (meth)acrylate, 4-hydroxypentyl (meth)acrylate, 5-hydroxypentyl (meth)acrylate, 2-hydroxyhexyl (meth)acrylate, 3-hydroxyhexyl (meth)acrylate, 4-hydroxyhexyl (meth)acrylate, 5-hydroxyhexyl (meth)acrylate, 6-hydroxyhexyl (meth)acrylate, 7-hydroxyheptyl (meth)acrylate, 8-hydroxyoctyl (meth)acrylate, 9-hydroxynonyl (meth)acrylate, 10-hydroxydecyl (meth)acrylate, and 12-hydroxylauryl (meth)acrylate. Among these, 2-hydroxyethyl (meth)acrylate is preferable.

The content of the structure derived from the hydroxyl monomer of the component (C) in the component (A), the modified polyolefin resin, is preferably 30% or less by mole, preferably 20% or less by mole, more preferably 15% or less by mole, while even more preferably 10% or less by mole, relative to 100% by mole as the total content of the structure derived from the (meth)acrylic acid component in the component (A), the modified polyolefin resin. The lower limit thereof is preferably 0.1% or more by mole, more preferably 1% or more by mol, even more preferably 2% or more by mole, while especially preferably 3% or more by mole.

The component (C), the hydroxyl monomer, may be used singly or in a combination of two or more of them.

In the present invention, the (meth)acrylic acid component includes
the component (D): the (meth)acrylate ester (low polarity monomer) represented by the following general formula (II):

   CH₂=C(R³)COOR⁴ (II)
(in the general formula (II), R³ represents a hydrogen atom or a methyl group; and R⁴ represents a linear, a branched and/or a cyclic alkyl group having 4 to 18 carbon atoms).

R³ represents a hydrogen atom or a methyl group, while a methyl group is preferable. R⁴ represents a linear, a branched and/or a cyclic alkyl group having 4 to 18 carbon atoms. The number of the carbon atom is an integer of 4 to 18, preferably 4 to 16, 4 to 14, 4 to 12, or 4 to 10, while more preferably 4 to 8, or 4 to 6.

Illustrative examples of the low polarity monomer of the component (D) include: (meth)acrylate esters whose R⁴ is a linear alkyl group, such as n-butyl (meth)acrylate, n-pentyl (meth)acrylate, n-hexyl (meth)acrylate, n-heptyl (meth)acrylate, n-octyl (meth)acrylate, n-nonyl (meth)acrylate, n-decyl (meth)acrylate, lauryl (meth)acrylate (n-dodecyl (meth)acrylate), n-tridecyl (meth)acrylate, and stearyl (meth)acrylate; (meth)acrylate esters whose R⁴ is a branched alkyl group, such as isobutyl (meth)acrylate, sec-butyl (meth)acrylate, tert-butyl (meth)acrylate, isopentyl (meth)acrylate, neopentyl (meth)acrylate, tert-pentyl (meth)acrylate, isohexyl (meth)acrylate, 2-ethylhexyl (meth)acrylate, and isodecyl (meth)acrylate; and (meth)acrylate esters whose R⁴ is a cyclic alkyl group, such as cyclopentyl (meth)acrylate and cyclohexyl (meth)acrylate. Among these, preferable are the (meth)acrylate esters whose R⁴ is a linear alkyl group, and the (meth)acrylate esters whose R⁴ is a cyclic alkyl group; while more preferable are n-butyl (meth)acrylate and cyclohexyl (meth)acrylate.

The content of the structure derived from the component (D), the low polarity monomer, in the component (A), the modified polyolefin resin, is preferably 25% or more by mole, more preferably 30% or more by mole, while even more preferably 40% or more by mole, relative to 100% by mole as the total content of the structure derived from the (meth)acrylic acid component in the component (A), the modified polyolefin resin. The upper limit thereof is preferably 90% or less by mole, or 85% or less by mole, more preferably 80% or less by mole, or 75% or less by mole, even more preferably 70% or less by mole, or 65% or less by mole, while especially preferably 60% or less by mole, or 55% or less by mole.

The component (D), the low-polarity monomer, may be used singly or in a combination of two or more of them.

The component (D), the low-polarity monomer, includes preferably a combination of a (meth)acrylate ester whose R⁴ is a linear alkyl group and a (meth)acrylate ester whose R⁴ is a cyclic alkyl group, while more preferably a combination of n-butyl (meth)acrylate and cyclohexyl (meth)acrylate are.

The molar ratio (component (C)/component (D)) of the content of the structure derived from component (C), the hydroxyl monomer, and the content of the structure derived from the component (D), the low polarity monomer, in the component (A), the modified polyolefin resin, is preferably in the range of 1/100 to 1/1.5, more preferably in the range of 1/50 to 1/2, while even more preferably in the range of 1/50 to 1/4.

The total content of the structure derived from the component (C), the hydroxyl monomer, and the structure derived from the component (D), the low-polarity monomer, in the component (A), the modified polyolefin resin, is preferably 30% or more by mole, more preferably 40% or more by mole, while even more preferably 45% or more by mole, relative to 100% by mole as the total content of the structure derived from the (meth)acrylic acid component in the component (A), the modified polyolefin resin. The upper limit thereof is preferably 95% or less by mole, more preferably 90% or less by mole, while even more preferably 85% or less by mole.

According to one embodiment of the present invention, it is preferable that the (meth)acrylic acid component further includes, as an optional component,
a component (E): a (meth)acrylate ester (alkoxyl monomer) represented by the following general formula (III):

   CH₂=C(R⁵)COOR⁶ ... (III)
(In the general formula (III), R⁵ represents a hydrogen atom or a methyl group; and R⁶ represents - CₐH₂ₐOC_{b}H_{2b+1}, where a and b each independently represent an integer of 1 to 18).

R⁵ represents a hydrogen atom or a methyl group, while preferably a hydrogen atom. Here, a is an integer of 1 to 18, preferably 1 to 16, 1 to 14, 1 to 12, or 1 to 10, more preferably 1 to 8, 1 to 6, or 1 to 4, even more preferably 2 to 4, or 2 to 3, while especially preferably 2. Also, b is an integer from 1 to 18, preferably 1 to 16, 1 to 14, 1 to 12, or 1 to 10, more preferably 1 to 8, 1 to 6, or 1 to 4, even more preferably 1 to 4, or 1 to 3, while especially preferably 1.

Illustrative examples of the component (E), the alkoxyl monomer, include 2-methoxyethyl (meth)acrylate, 2-ethoxyethyl (meth)acrylate, 2-propoxyethyl (meth)acrylate, 2-(1-methylethoxy)ethyl (meth)acrylate, 2-methoxypropyl (meth)acrylate, 2-ethoxypropyl (meth)acrylate, 2-propoxypropyl (meth)acrylate, 2-(1-methylethoxy)propyl (meth)acrylate, 3-methoxypropyl (meth)acrylate, 3-ethoxypropyl (meth)acrylate, 3-propoxypropyl (meth)acrylate, 3-(1-methylethoxy)propyl (meth)acrylate, 2-methoxy-1-methylethyl (meth)acrylate, 2-ethoxy-1-methylethyl (meth)acrylate, 2-propoxy-1-methylethyl (meth)acrylate, and 2-(1-methylethoxy)-1-methylethyl (meth)acrylate. Among these, 2-methoxyethyl (meth)acrylate is preferable.

According to one embodiment, the content of the structure derived from the component (E), the alkoxyl monomer, in the component (A), the modified polyolefin resin, is preferably 50% or less by mole, while more preferably 40% or less by mole, relative to 100% by mole as the total content of the structure derived from the (meth)acrylic acid component in the component (A), the modified polyolefin resin. The lower limit thereof is preferably 0.1% or more by mole, while more preferably 1% or more by mole.

The component (E), the alkoxyl monomer may be used singly or in a combination of two or more of them.

According to one embodiment of the present invention, it is preferable that the (meth)acrylic acid component further includes, as an optional component,
a component (F): a (meth)acrylate ester (lower monomer) represented by the following general formula (IV):

   CH₂=C(R⁷)COOR⁸ ... (IV)
(In the general formula (IV), R⁷ represents a hydrogen atom or a methyl group; and R⁸ represents a linear or a branched alkyl group having 1 to 3 carbon atoms.)

R⁷ represents a hydrogen atom or a methyl group, while a methyl group is preferable. R⁸ represents a linear, a branched and/or a cyclic alkyl group having 1 to 3 carbon atoms. The number of the carbon atom is an integer of 1 to 3, preferably 1 or 2, while more preferably 1.

Illustrative examples of the component (F), the lower monomer, include methyl (meth)acrylate, ethyl (meth)acrylate, n-propyl (meth)acrylate, and isopropyl (meth)acrylate. Among these, methyl (meth)acrylate is preferable.

According to one embodiment, the content of the structure derived from the component (F), the lower monomer, in the component (A), is preferably 1% or more by mole, while more preferably 5% or more by mole, relative to 100% by mole as the total content of the structure derived from the (meth)acrylic acid component in the component (A), the modified polyolefin resin. The upper limit thereof is preferably 70% or less by mole, while more preferably 60% or less by mole.

The component (F), the lower monomer, may be used singly or in a combination of two or more of them.

According to one embodiment of the present invention, it is preferable that the (meth)acrylic acid component further includes a component (G) ((meth)acrylic acid) as an optional component. The component (G), the (meth)acrylic acid, is preferably methacrylic acid. The component (G), (meth)acrylic acid, may be in the form of a free acid or a salt thereof (sodium salt, potassium salt, etc.).

According to one embodiment, the content of the structure derived from the component (G), (meth) acrylic acid, in the component (A), the modified polyolefin resin, is preferably 1% or more by mole, more preferably 5% or more by mole, relative to 100% by mole as the total content of the structure derived from the (meth)acrylic acid component in the component (A), the modified polyolefin resin. The upper limit thereof is preferably 70% or less by mole, while more preferably 50% or less by mole.

According to one embodiment of the present invention, the (meth)acrylic acid component may further contain, as an optional component, a (meth)acrylic acid component other than the component (C) to the component (G).

Illustrative examples of the (meth)acrylic acid component other than the component (C) to the component (G) include isobonyl (meth)acrylate, glycidyl (meth)acrylate, benzyl (meth)acrylate, phenyl (meth)acrylate, phenoxyethyl (meth)acrylate, 4-hydroxycyclohexyl (meth)acrylate, (4-hydroxymethylcyclohexyl)methyl (meth)acrylate, 1,4-cyclohexanedimethanol mono(meth)acrylate, 2-hydroxy-3-phenoxypropyl (meth)acrylate, 2-(meth)acryloyloxyethyl-2-hydroxypropyl phthalate, glycerol mono(meth)acrylate, poly(ethylene glycol) mono(meth)acrylate, poly(propylene glycol) mono(meth)acrylate, poly(tetramethylene glycol) mono(meth)acrylate, 2-(dimethylamino)ethyl (meth)acrylate, 2-(diethylamino)ethyl (meth)acrylate, and acetoacetoxyethyl (meth)acrylate.

The total content of the structure derived from the (meth)acrylic acid component in the dispersion composition is 3% or more by weight, while preferably 5% or more by weight, relative to 100% by weight as the total amount of the component (A), the modified polyolefin resin, and the (meth)acrylic acid component polymer. The upper limit thereof is 94% or less by weight, preferably 90% or less by weight, more preferably 80% or less by weight, even more preferably 70% by weight, while especially preferably 60% or less by weight. According to one embodiment, the total content of the structure derived from the (meth)acrylic acid component in the dispersion composition is 3% to 94% by weight, while from the viewpoint to further enhance the adhesion strength, preferably 5% to 90% by weight, relative to 100% by weight as the total amount of the component (A), the modified polyolefin resin. "(Meth)acrylic acid component polymer" means the polymer whose composition unit is the structure derived from the (meth)acrylic acid component, and is an arbitrary component that can be included in the dispersion composition. According to one embodiment, this can be a byproduct formed by polymerization of the (meth)acrylic acid components among themselves that did not react with the polyolefin resin during modification of the polyolefin resin.

### (1-3. Modification by Acid Component Other Than (Meth)acrylic Acid Component)

In the present invention, the component (A), the modified polyolefin resin, may be modified with an acid component other than the (meth)acrylic acid component. Illustrative examples of the acid component other than the (meth)acrylic acid component include an α,β-unsaturated carboxylic acid other than the (meth)acrylic acid component and the derivatives thereof. Illustrative examples of the derivative include an α,β-unsaturated carboxylic anhydride and an α,β-unsaturated carboxylic acid ester.

Illustrative examples of the α,β-unsaturated carboxylic acid other than the (meth)acrylic acid component and the derivative thereof include maleic acid, maleic anhydride, fumaric acid, citraconic acid, citraconic anhydride, mesaconic acid, itaconic acid, itaconic anhydride, aconitic acid, aconitic anhydride, and nadic anhydride. Among these, from the viewpoint of grafting property to the polyolefin, maleic anhydride is preferable.

The acid component used for modification using the acid component other than the (meth)acrylic acid component may be one acid component singly or a combination of two or more acid components.

The total grafting weight (degree of modification) of the acid component other than the (meth)acrylic acid component in the component (A), the modified polyolefin resin, is preferably 20% or less by weight, more preferably 10% or less by weight, while even more preferably 5% or less by weight, relative to 100% by weight as the weight of the component (A), the modified polyolefin resin, excluding the weight derived from the (meth)acrylic acid component. With this, generation of unreacted materials can be suppressed. The lower limit thereof can be, for example, 0% or more by weight. The grafting weight (% by weight) can be determined, for example, by an alkali titration method or a Fourier transform infrared spectroscopy.

### (1-4. Chlorination)

In the present invention, the component (A), the modified polyolefin resin, may be chlorinated.

The degree of chlorination (chlorine content) of the component (A), the modified polyolefin resin, is preferably 40% or less by weight, more preferably 35% or less by weight, even more preferably 30% or less by weight, while especially preferably 25% or less by weight, relative to 100% by weight as the component (A) excluding the weight derived from the (meth)acrylic acid component. With this, the gasohol resistance can be enhanced. The lower limit thereof is, for example, 0% or more by weight, preferably more than 0% by weight, more preferably 5% or more by weight, even more preferably 10% or more by weight, while further even more preferably 14% or more by weight. With this, a good solubility in a solvent can be obtained. According to one embodiment, the degree of chlorination is preferably in the range of 5% to 30% by weight, while more preferably in the range of 10% to 25% by weight. With this, the polarity can be kept below a certain level, so that sufficient adhesion to a non-polar substrate such as a polyolefin substrate can be obtained. The degree of chlorination can be measured with the method according to JIS-K7229. Namely, this can be measured by "the oxygen flask combustion method", in which the chlorine-containing resin is burned under an oxygen atmosphere, then the gaseous chlorine thereby generated is absorbed with water, and then, the amount thereof is quantified by titration.

### (1-5. Characteristics of the Component (A), the Modified Polyolefin Resin)

The weight-average molecular weight of the component (A), the modified polyolefin resin, is preferably 5,000 or more, more preferably 7,000 or more, even more preferably 9,000 or more, while especially preferably 10,000 or more. The upper limit thereof is preferably 400,000 or less, more preferably 350,000 or less, while even more preferably 300,000 or less. According to one embodiment, the weight-average molecular weight of the component (A), the modified polyolefin resin, is preferably in the range of 5,000 to 400,000, more preferably in the range of 7,000 to 350,000, while even more preferably in the range of 10,000 to 300,000. The weight-average molecular weight can be measured by GPC using polystyrene as a standard substance.

### (1-6. Method for Producing the Component (A), the Modified Polyolefin Resin)

The component (A), the modified polyolefin resin, can be produced by modifying a polyolefin resin.

Accordingly, the method for producing the component (A), the modified polyolefin resin, may include:
a process (a): preparation of a polyolefin resin, and
a process (b): modification with the (meth)acrylic acid component, in this order.

When the component (A), the modified polyolefin resin, is the polyolefin modified with an acid component other than the (meth)acrylic acid component, the method may include after the process (a),
a process (c): modification with the acid component other than the (meth)acrylic acid component.

The process (c) may be carried out at a different time from the process (b) or at the same time as the process (b). It is preferable to carry out the process (c) at a different time from the process (b). The process (c) can be carried out at any time after the process (a), but it is preferable to carry out prior to the process (b).

When the component (A), the modified polyolefin resin, is chlorinated, this may include, after the process (a),
a process (d): chlorination.

The process (d) can be carried out at any time after the process (a), but it is preferable to carry out before the process (b); and when the process (c) is included, it is more preferable to carried out before the process (b) and after the process (c).

According to one embodiment, the method for producing the component (A), the modified polyolefin resin, includes preferably the processes in the order of the process (a) and the process (b), or in the order of the process (a), the process (c), and the process (b), or in the order of the process (a), the process (d), and the process (b), or in the order of the process (a), the process (c), the process (d), and the process (b), or in the order of the process (a), the process (d), the process (c), and the process (b); or it is preferable to include the processes in the order of the process (a) and the process (b), or in the order of process (a), the process (c), and the process (b), or in the order of the process (a), the process (d), and the process (b), or in the order of the process (a), the process (c), the process (d), and the process (b).

The process (a) is the process to prepare a polyolefin resin.

The lower limit of the melting point of the polyolefin resin prepared at the process (a) is preferably 50°C or higher, while more preferably 60°C or higher. When the melting point of the polyolefin resin prepared at the process (a) is 50°C or higher, the coating film can express a sufficient strength upon using the component (A), the modified polyolefin resin, for an ink, a paint, or the like. Accordingly, the adhesion to the substrate can be sufficiently expressed. When used as an ink, the blocking during printing can be suppressed.

The upper limit of the melting point of the polyolefin resin prepared at the process (a) is preferably 120°C or lower, more preferably 110°C or lower, even more preferably 100°C or lower. When the melting point of the polyolefin resin prepared at the process (a) is 120°C or lower, it is possible to prevent the coating film from becoming too hard upon using the component (A), the modified polyolefin resin, for an ink, a paint, or the like. Accordingly, the coating film can express a proper flexibility.

According to one embodiment, the melting point of the polyolefin resin prepared at the process (a) is preferably in the range of 50°C to 120°C, more preferably in the range of 60°C to 110°C, while even more preferably in the range of 60°C to 100°C.

The process (b) is the process to modify with the (meth)acrylic acid component, and the process (c) is the process to modify with an acid component (hereinafter this is sometimes referred to as "acid component") other than the (meth)acrylic acid component.

The processes (b) and (c) each may be carried out by introducing the (meth)acrylic acid component or the acid component into the polyolefin resin, for example, by graft copolymerization. The method of graft copolymerization is not particularly limited; so, known methods such as the melting method and the solution method may be used. In the case of the melting method, the operation is simple and the reaction time is short. In the case of the solution method, a uniform graft polymerization product may be obtained with less side reactions.

According to one embodiment, it is preferable that the process (b) is carried out by the solution method. According to one embodiment, it is preferable that the process (c) is carried out by the melting method.

When the process (b) or the process (c) is carried out by the melting method, for example, the polyolefin is heated and melted (melted by heating) in the presence of a radical reaction initiator to cause the reaction. The temperature of heating and melting needs to be the melting point or higher, preferably in the range of the melting point or higher to 300°C or lower. For heating and melting, equipment such as a Banbury mixer, a kneader, or an extruder may be used.

The radical reaction initiator may be, for example, a thermal polymerization reaction initiator that generates a free radical upon heating, such as an organic peroxide compound and an azonitrile. Illustrative examples of the organic peroxide compound include di-tert-butyl peroxide, dicumyl peroxide, tert-butylcumyl peroxide, dibenzoyl peroxide, benzoyl m-tolyl peroxide, di(m-tolyl)benzoyl peroxide, dilauryl peroxide, 2,5-dimethyl-2,5-di(tert-butylperoxy)hexane, cumene hydroperoxide, tert-butyl hydroperoxide, 1,1-bis(tert-butylperoxy)-3,5,5-trimethylcyclohexane, 1,1-bis(tert-butylperoxy)-cyclohexane, cyclohexanone peroxide, tert-butylperoxybenzoate, tert-butylperoxyisobutyrate, tert-butylperoxy-3,5,5-trimethylhexanoate, tert-butylperoxy-2-ethylhexanoate, tert-butylperoxyisopropyl carbonate, and cumylperoxyoctoate. Illustrative examples of the azonitrile include 2,2-azobis(2-methylbutyronitrile), 2,2-azobisisobutyronitrile, 2,2-azobis(2,4-dimethylvaleronitrile), and 2,2-azobis(4-methoxy-2,4-dimethylvaleronitrile).

When the process (b) or the process (c) is carried out by the melting method, it is preferable that the process (b) or the process (c) is carried out using an extruder (by extrusion modification). In the extrusion modification method, for example, raw materials are blended and fed to a feed section of an extruder (e.g., a co-directional multi-screw extruder or a twin-screw extruder), in which the processes of mixing, melt kneading, reaction of the raw materials, as well as the cooling by volatilization are sequentially carried out, and then, the resin coming out from the tip dice is cooled (e.g., by immersing into a water bath) to obtain the polyolefin resin that is modified with the (meth)acrylic acid component or the acid component. The progress of the reaction can be controlled by controlling the temperatures of various sections of the barrel as well as the screw's rotation speed.

When the process (b) or the process (c) is carried out by the solution method, for example, the polyolefin is dissolved in an organic solvent, and then heated and stirred in the presence of a radical reaction initiator. The temperature during the reaction is preferably in the range of 100°C to 180°C. After the process (b) or the process (c), the organic solvent in the system may be removed under reduced pressure, or an extruder may be used to remove the organic solvent.

When the process (b) or the process (c) is carried out by the solution method, examples of the organic solvent that can be used include hydrocarbon solvents, preferably aromatic hydrocarbon solvents such as toluene, o-xylene, m-xylene, p-xylene, and ethylbenzene; or aliphatic hydrocarbon solvents such as n-pentane, cyclopentane, n-hexane, isohexane, cyclohexane, n-heptane, methylcyclohexane, n-octane, ethylcyclohexane, n-nonane, and n-decane.

The content of the component (C), the hydroxyl monomer, in the (meth)acrylic acid component used at the process (b) is preferably 20% or less by mole, more preferably 15% or less by mole, while even more preferably 10% or less by mole, relative to 100% by mole as the (meth)acrylic acid component used at the process (b). The lower limit thereof is preferably 0.1% or more by mole, more preferably 1% or more by mole, while even more preferably 3% or more by mole.

The content of the component (D), the low-polarity monomer, in the (meth)acrylic acid component used at the process (b) is preferably 25% or more by mole, more preferably 30% or more by mole, while even more preferably 40% or more by mole, relative to 100% by mole as the (meth)acrylic acid component used at the process (b). The upper limit thereof is preferably 90% or less by mole, or 85% or less by mole, more preferably 80% or less by mole, or 75% or less by mole, even more preferably 70% or less by mole, or 65% or less by mole, while especially preferably 60% or less by mole, or 55% or less by mole.

According to one embodiment, the content of the component (E), the alkoxyl monomer, in the (meth)acrylic acid component used at the process (b) is preferably 50% or less by mole, while more preferably 40% or less by mole, relative to 100% by mole as the (meth)acrylic acid component used at the process (b). The lower limit thereof is preferably 0.1% or more by mole, while more preferably 1% or more by mole.

According to one embodiment, the content of the component (F), the lower monomer, in the (meth)acrylic acid component used at the process (b) is, preferably 1% or more by mole, while more preferably 5% or more by mole, relative to 100% by mole as the (meth)acrylic acid component used at the process (b). The upper limit thereof is preferably 70% or less by mole, while more preferably 50% or less by mole.

The weight-average molecular weight of the modified or the unmodified polyolefin resin (polyolefin-based resin) in the stage immediately before the process (b) is preferably 200,000 or less, more preferably 150,000 or less, while even more preferably 120,000 or less. The lower limit thereof is preferably 10,000 or more, more preferably 20,000 or more, while even more preferably 40,000 or more.

The degree of chlorination (chlorine content) of the polyolefin resin in the stage immediately before the process (b) is preferably 40% or less by weight, more preferably 35% or less by weight, even more preferably 30% or less by weight, while especially preferably 25% or less by weight, relative to 100% by weight as the polyolefin resin. The lower limit thereof is, for example, 0% or more by weight, preferably more than 0% by weight, more preferably 5% or more by weight, even more preferably 10% or more by weight, still even more preferably 14% or more by weight, while especially preferably 16% or more by weight.

The total grafting weight (degree of modification) with the acid component other than the (meth)acrylic acid component in the polyolefin resin in the stage immediately before the process (b) is preferably 20% or less by weight, while more preferably 10% or less by weight, relative to 100% by weight as the polyolefin resin. The lower limit thereof can be, for example, 0% or more by weight.

The polyolefin resin in the stage immediately before the process (b) may be a single resin or a mixture of two or more resins.

The reaction ratio (mass ratio) of the polyolefin resin in the stage immediately before the process (b) and the (meth)acrylic acid component (polyolefin resin/(meth)acrylic acid component) at the process (b) is in the range of 97/3 to 6/94, while preferably in the range of 95/5 to 10/90.

The process (d) is to carry out chlorination.

Chlorination may be carried out after dissolving the raw material resin into a chlorine-based solvent such as chloroform in advance. Chlorination is carried out, for example, by blowing a chlorine gas into the reaction system. The chlorine gas may be blown under UV irradiation or in the presence of a radical reaction initiator. The pressure at which the chlorine gas is blown is not restricted; so, this may be either atmospheric or with a pressure. The temperature at which the chlorine gas is blown is not restricted; this may be, for example, in the range of 50°C to 140°C.

### (2. Component (B): Dispersing Medium)

The dispersion composition according to the present invention includes an alcohol solvent and an aliphatic hydrocarbon solvent as the dispersing medium for dispersing the component (A), the modified polyolefin resin. With this, the increase in viscosity of the dispersion composition can be suppressed, and also superior dispersibility and stability can be expressed. The mechanism of this is presumed as follows. The structure may be formed in which a polyolefin structure derived from an unmodified raw material encapsulates a low-polarity group, then this is surrounded by a structure derived from the (meth)acrylic acid component so as to be dispersed in a solvent as the dispersed particles. Because of this, the dispersed particles can exist stably in the composition. In addition, the hydroxyl group derived from the (meth)acrylic acid component can be oriented toward the alcohol solvent side, and the low-polarity group toward the polyolefin structure side, so that the dispersed particles can take a stable structure in the composition.

Illustrative examples of the alcohol solvent include: aliphatic alcohols such as methanol, ethanol, n-propyl alcohol, isopropyl alcohol, n-butyl alcohol, isobutyl alcohol, sec-butyl alcohol, tert-butyl alcohol, 2-ethyl-hexanol, and 1-pentanol; and glycol mono-ethers such as propylene glycol monomethyl ether, propylene glycol monoethyl ether, propylene glycol monopropyl ether, propylene glycol monoisopropyl ether, and propylene glycol monobutyl ether. Although there is no particular restriction, those having 4 or less carbon atoms are preferred. Illustrative examples of the alcohol having 4 or less carbon atoms include aliphatic alcohols such as methanol, ethanol, n-propyl alcohol, isopropyl alcohol, n-butyl alcohol, isobutyl alcohol, sec-butyl alcohol, and tert-butyl alcohol. When the number of the carbon atom is 4 or less, the dissolution of the resin component into the alcohol is suppressed due to the high polarity of the alcohol, making it easier to stably disperse as the resin particles.

Illustrative examples of the aliphatic hydrocarbon solvent include n-pentane, cyclopentane, n-hexane, isohexane, cyclohexane, n-heptane, methylcyclohexane, n-octane, ethylcyclohexane, n-nonane, and n-decane. Among them, cyclohexane, methylcyclohexane, and ethylcyclohexane are preferable, while methylcyclohexane is more preferable.

The alcohol solvent and the aliphatic hydrocarbon solvent each may be used singly or in a combination of two or more of them.

The content ratio (mass ratio) of the alcohol solvent to the aliphatic hydrocarbon solvent (alcohol solvent/aliphatic hydrocarbon solvent) is in the range of 99/1 to 10/90, preferably in the range of 95/5 to 50/50, more preferably in the range of 90/10 to 70/30.

The total content of the alcohol solvent and the aliphatic hydrocarbon solvent in the dispersing medium is 80% or more by weight, preferably 90% or more by weight, more preferably 95% or more by weight, relative to 100% by weight as the dispersing medium.

The dispersion composition may include, in addition to the alcohol solvent and the aliphatic hydrocarbon solvent, other solvent as the dispersing medium. A wide range of solvents usually used for an ink and/or a paint may be used as the other solvent; illustrative examples thereof includes aromatic hydrocarbon solvents such as toluene, o-xylene, m-xylene, p-xylene, and ethyl benzene; ester solvents such as methyl acetate, ethyl acetate, n-propyl acetate, isopropyl acetate, and n-butyl acetate; ketone solvents such as acetone, methyl ethyl ketone, and dimethyl butyl ketone; glycol solvents such as ethylene glycol, ethyl cellosolve, and butyl cellosolve, although not limited to these solvents.

The dispersing medium in the dispersion composition according to the present invention may include water. The content ratio of water can be preferably 10% or less by weight relative to 100% by weight as the total weight of the dispersing medium.

### (3. Dispersion Composition)

The dispersion composition according to the present invention is the dispersion composition in which at least the component (A), the modified polyolefin resin, is dispersed in the component (B), the dispersing medium including the alcohol solvent and the aliphatic hydrocarbon solvent.

The solid fraction in the dispersion composition according to the present invention is 30% or more by weight, while preferably 35% or more by weight. With this, a proper interaction is generated among the dispersed particles in the composition so that the dispersibility thereof can be enhanced. The upper limit of the solid fraction in the dispersion composition is 80% or less by weight, preferably 70% or less by weight, more preferably 60% or less by weight, while even more preferably 50% or less by weight. According to one embodiment, the solid fraction in the dispersion composition is preferably in the range of 30% to 70% by weight, more preferably in the range of 30% to 60% by weight, while even more preferably in the range of 35% to 50% by weight. With this, a superior sustainable stability can be obtained. The solid fraction can be controlled by changing the amount of the dispersing medium used.

In addition to the component (A), the modified polyolefin resin, and the component (B), the dispersing medium, the dispersion composition according to the present invention may include other component to the extent that it does not impair the purpose and the effect of the present invention. Illustrative examples of the other component include: a polymer having the composition unit of the structure derived solely from (meth)acrylic acid component and a resin component of (meth)acrylic acid such as the (meth)acrylic acid components (monomers), as well as a stabilizer, a basic substance, an emulsifier, a crosslinking agent, a diluent, and a curing agent. Here, it is preferable to include at least a stabilizer.

As for the stabilizer, for example, a compound containing an epoxy ring, such as an epoxy stabilizer, may be mentioned. As for the epoxy stabilizer, the epoxy compound having an epoxy equivalent of about 100 to about 500 and containing one or more epoxy groups in one molecule thereof may be mentioned. More specifically, illustrative examples thereof include: epoxidized soybean oil and linseed oil, which are obtained by oxidizing vegetable oils having a natural unsaturated group with a peracid such as peracetic acid; an epoxidized aliphatic acid ester, which is obtained by epoxidizing a unsaturated aliphatic acid such as oleic acid, a tall oil aliphatic acid, and a soybean oil aliphatic acid; an epoxidized alicyclic compound such as epoxidized tetrahydrophthalate; a condensation product of bisphenol A or a polyvalent alcohol with epichlorohydrin, such as bisphenol A glycidyl ether, ethylene glycol glycidyl ether, propylene glycol glycidyl ether, glycerol polyglycidyl ether, and sorbitol polyglycidyl ether; and a monoepoxy compound represented by butyl glycidyl ether, 2-ethylhexyl glycidyl ether, decyl glycidyl ether, stearyl glycidyl ether, allyl glycidyl ether, phenyl glycidyl ether, sec-butyl phenyl glycidyl ether, tert-butyl phenyl glycidyl ether, and phenol polyethylene oxide glycidyl ether. The stabilizer may also be the compound that does not contain an epoxy ring; so, illustrative examples thereof include: metal soaps such as calcium stearate and lead stearate, which are used as the stabilizer for a polyvinyl chloride resin; organometallic compounds such as dibutyltin dilaurate and dibutylmalate; and a hydrotalcite compound.

The stabilizer may also be the compound that does not contain an epoxy ring; so, illustrative examples thereof include: metal soaps such as calcium stearate and lead stearate, which are used as the stabilizer for a polyvinyl chloride resin; organometallic compounds such as dibutyltin dilaurate and dibutylmalate; and a hydrotalcite compound.

The content of the stabilizer is preferably 0.1% or more by weight, more preferably 1% or more by weight, while even more preferably 2% or more by weight, relative to 100% by weight as the component (A), the modified polyolefin resin. With this, a superior stabilizing effect can be expressed. The upper limit of the content of the stabilizer is preferably 15% or less by weight, more preferably 12% or less by weight, while even more preferably 10% or less by weight. With this, a superior adhesion to the substrate such as polyolefin can be expressed.

Illustrative examples of the basic compound include sodium hydroxide, potassium hydroxide, ammonia, methylamine, propylamine, hexylamine, octylamine, ethanolamine, propanolamine, diethanolamine, N-methyl diethanolamine, dimethylamine, diethylamine, triethylamine, N,N-dimethylethanolamine, 2-dimethylamino-2-methyl-1-propanol, 2-amino-2-methyl-1-propanol, morpholine, dimethylethanolamine, and 2-amino-2-ethyl-1,3-propanediol. The basic substance used may be one type or a combination of two or more types of them.

As for the emulsifier, surfactants such as a nonionic surfactant and an anionic surfactant may be mentioned.

Illustrative examples of the nonionic surfactant include a polyoxyethylene alkyl ether, a polyoxyethylene polyoxypropylene alkyl ether, a polyoxyethylene derivative, a polyoxyethylene aliphatic acid ester, a polyoxyethylene polyalcohol aliphatic acid ester, a polyoxyethylene polyoxypropylene polyol, a sorbitan aliphatic acid ester, a polyoxyethylene hardened castor oil, a polyoxyalkylene polycyclic phenyl ether, a polyoxyethylene alkylamine, an alkyl alkanolamide, and a polyalkylene glycol (meth)acrylate.

Illustrative examples of the anionic surfactant include an alkyl sulfate, a polyoxyethylene alkyl ether sulfate, an alkylbenzenesulfonate, an α-olefin sulfonate, a methyl taurylate, a sulfosuccinate, an ether sulfonate, an ether carboxylate salt, an aliphatic acid salt, a naphthalenesulfonic acid formalin condensate, an alkylamine salt, a quaternary ammonium salt, an alkyl betaine, and an alkylamine oxide.

The Type B viscosity of the dispersion composition according to the present invention at 25°C is preferably 1200 mPa·s or less, while more preferably 1000 mPa·s or less.

The dispersion composition according to the present invention has superior dispersibility and sustainable stability, and is high in the solid content and low in the viscosity; so, this can be used as a primer, an adhesive, and a binder for a paint or an ink. When the dispersion composition according to the present invention is used for these applications, they may contain, as needed, an ingredient usually included in various applications, such as a preservative, a leveling agent, an antioxidant, a light stabilizer, a UV absorber, a dye, a pigment, a metal salt, and an acid.

There is no particular restriction in the method for producing the dispersion composition. For example, there may be mentioned the method in which the component (A), the modified polyolefin resin, is dispersed by adding the alcohol solvent, the aliphatic hydrocarbon solvent, and as needed, an optional component, and the method in which in the presence of the aliphatic hydrocarbon solvent, the component (A), the modified polyolefin resin, is dispersed by adding the alcohol solvent and as needed, an optional component. Dispersion may be done by agitation, and as needed, the temperature may be adjusted by heating or the like.

According to the second embodiment, the present invention provides a dispersion composition comprising at least:
the component (A): the modified polyolefin resin; wherein:
the component (A) is dispersed in the mixed solvent (dispersing medium) of the alcohol solvent and the aliphatic solvent (aliphatic hydrocarbon solvent);
the component (A) is obtained by graft modifying
a component (α): a polyolefin resin, with
a component (β): a modifying component containing at least a (meth)acrylate ester represented by the general formula (I):

   CH₂=C(R¹)COOR² (I)
(in the general formula (I), R¹ represents a hydrogen atom or a methyl group; and R² represents -CₘH₂ₘOH, where m represents an integer of 1 to 18), and
a (meth)acrylate ester represented by the general formula (II):

   CH₂=C(R³)COOR⁴ (II)
(in the general formula (II), R³ represents a hydrogen atom or a methyl group; and R⁴ represents a linear, a branched and/or a cyclic alkyl group having 4 to 18 carbon atoms); and
a content ratio (weight ratio) of the component (α) and the component (β) (Component (α)/(β)) is in the range of 97/3 to 6/94 (provided that component (α) + component (β) = 100), and
the solid fraction is in the range of 30% to 80%.

Illustrative examples of the component (α), the polyolefin resin, include a polyolefin resin, an acid-modified polyolefin resin, a chlorinated polyolefin resin, and a chlorinated acid-modified polyolefin resin.

The acid-modified polyolefin resin is the polyolefin resin modified with an α,β-unsaturated carboxylic acid and with a derivative thereof. Illustrative examples of the α,β-unsaturated carboxylic acid and the derivative thereof include maleic acid, maleic anhydride, fumaric acid, citraconic acid, citraconic anhydride, mesaconic acid, itaconic acid, itaconic anhydride, aconic acid, aconitic anhydride, nadic anhydride, (meth)acrylic acid, (meth)acrylate ester (excluding (meth)acrylate esters represented by the general formulas (I) and (II)). Among these, from a viewpoint of grafting capacity to the polyolefin, maleic anhydride is preferable. The degree of modification (grafting weight) by the α,β-unsaturated carboxylic acid and/or by the derivatives thereof is preferably 0 to 20% by weight, while more preferably 0 to 10% by weight. The same method as the process (c) described before may be used to produce the acid-modified polyolefin resin.

The chlorinated polyolefin resin is the polyolefin resin having been introduced with chlorine, and may also be the polyolefin resin having, in addition to chlorine, the α,β-unsaturated carboxylic acid or the derivative thereof (acid-modified chlorinated polyolefin resin). The same method as the process (d) described before may be used for introduction of chlorine. In the production of the acid-modified chlorinated polyolefin resin, both the acid modification and chlorination may be carried out. The order of the acid-modification and chlorination is not particularly restricted, but it is preferable that the chlorination is carried out after the acid-modification. The degree of chlorination in the chlorinated polyolefin resin is preferably 30% or less by weight, while more preferably 25% or less by weight. The lower limit thereof is, for example, more than 0% by weight, preferably 5% or more by weight, while more preferably 10% or more by weight. The degree of chlorination is preferably in the range of 5 to 30% by weight, while more preferably in the range of 10 to 25% by weight.

The weight-average molecular weight of the component (α), the polyolefin resin, is preferably 200,000 or less, more preferably 90,000 or less, while even more preferably 70,000 or less. The lower limit thereof is, for example, 10,000 or more, while more preferably 20,000 or more.

The component (α), the polyolefin resin, may be one polyolefin resin or a combination of two or more polyolefin resins, although it is preferable to contain at least one acid-modified chlorinated polyolefin resin.

The component (β), the modifying component, includes (meth)acrylate esters represented by the general formulas (I) and (II) (component (C), the hydroxyl monomer, and component (D), the low-polarity monomer). Illustrative examples of the other modifying component that the component (β), the modifying component, may contain include an α,β-unsaturated carboxylic acid and a derivative thereof, and a (meth)acrylate ester other than the components (C) and (D). These examples are the same as those listed in the description of the acid-modified polyolefin resin. Among them, a (meth)acrylic acid and a (meth)acrylate ester other than the components (C) and (D) are preferable, while methyl (meth)acrylate and 2-methoxyethyl (meth)acrylate are preferable.

The content of the (meth)acrylate ester represented by the general formula (I) is, for example, 20% or less by mole, preferably 15% or less by mole, while more preferably 10% or less by mole, relative to the total amount of the component (β), the modifying component. The lower limit thereof is, for example, 0.1% or more by mole, preferably 1% or more by mole, while more preferably 3% or more by mole. The content of the (meth)acrylate ester represented by the general formula (II) is, for example, 25% or more by mole, preferably 30% or more by mole, while more preferably 40% or more by mole, relative to the total amount of the component (β), the modifying component. The upper limit thereof is, for example, 90% or less by mole, while preferably 85% or less by mole.

The molar ratio of the content of the (meth)acrylate esters represented by the general formulas (I) and (II) to the content of the component (β), the modifying component, is, for example, 30% or more by mole, preferably 40% or more by mole, while more preferably 45% or more by mole. The upper limit thereof is 95% or less by mole, preferably 90% or less by mole, while more preferably 85% or less by mole.

The content ratio (component (α)/component (β)) of the component (α), the polyolefin resin, and the component (β), the modifying component, is in the range of 97/3 to 6/94, preferably in the range of 95/5 to 10/90, more preferably in the range of 95/5 to 50/50, while even more preferably in the range of 95/5 to 60/40. With this, the adhesion strength can be enhanced. The above values are based on the assumption that component (α) + component (β) = 100.

### [Examples]

Hereinafter, the present invention will be specifically described by using Examples, but the present invention is not limited to these Examples. Note that the unit "parts" used below means "parts by mass". The temperature condition in the following description is a room temperature (25°C) unless otherwise specifically mentioned. The pressure condition is under a normal pressure (1 atm) unless otherwise specifically mentioned.

### [Production Example 1: Acid-modified Chlorinated Polyolefin Resin (A-1)]

One hundred parts of the polyolefin resin (propylene-based random copolymer with the propylene component unit content of 96% by weight and the ethylene component unit content of 4% by weight) produced using a metallocene catalyst as the polymerization catalyst, 4 parts of maleic anhydride (α,β-unsaturated carboxylic anhydride), and 2 parts of di-tert-butyl peroxide (radical reaction initiator) were uniformly mixed and fed into a twin-screw extruder (L/D = 60, diameter = 15 mm, the first barrel to the fourteenth barrels).

The reaction was carried out with the residence time of 10 min, the rotation speed of 200 rpm, and the barrel temperature of 100°C (the first and second barrels), 200°C (the third to eighth barrels), 90°C (the ninth and tenth barrels), and 110°C (the eleventh to fourteenth barrels). Then, the unreacted maleic anhydride was removed under reduced pressure to obtain an acid-modified polyolefin resin modified with maleic anhydride.

One hundred parts of the acid-modified polyolefin resin was fed into a glass-lined reaction vessel. Chloroform was added, and the resin was thoroughly dissolved at the temperature of 110°C and the pressure of 2 kgf/m²; then, 2 parts of 2,2-azobisisobutyronitrile (radical reaction initiator) was added. The chlorination was carried out by blowing a chlorine gas while controlling the pressure inside the vessel at 2 kgf/cm².

After the reaction, 6 parts of an epoxy compound (Epocizer W-100EL, manufactured by DIC Corp.) was added as the stabilizer, and then, the resulting mixture was fed to a vented extruder equipped with a solvent-removing suction unit at the screw shaft portion to remove the solvent and solidify to obtain the acid-modified chlorinated polyolefin resin (A-1). The acid-modified chlorinated polyolefin resin (A-1) thus obtained had the weight-average molecular weight of 60,000, the degree of modification with maleic anhydride of 2.5% by weight, and the chlorine content of 15% by weight.

### [Production Example 2: Chlorinated Polyolefin Resin (A-2)]

One hundred parts of the polyolefin resin (propylene-based random copolymer with the propylene component unit content of 96% by weight, the ethylene component unit content of 4% by weight) produced using a metallocene catalyst as the polymerization catalyst was fed into a glass-lined reaction vessel. Chloroform was added, and the resin was thoroughly dissolved at the temperature of 110°C and the pressure of 2 kgf/m²; then, 2 parts of 2,2-azobisisobutyronitrile (radical reaction initiator) was added. The chlorination was carried out by blowing a chlorine gas while controlling the pressure inside the vessel at 2 kgf/cm².

After the reaction, 6 parts of an epoxy compound (Epocizer W-100EL, manufactured by DIC Corp.) was added as the stabilizer, and then, the resulting mixture was fed to a vented extruder equipped with a solvent-removing suction unit at the screw shaft portion to remove the solvent and solidify to obtain the chlorinated polyolefin resin (A-2). The chlorinated polyolefin resin (A-2) thus obtained had the weight-average molecular weight of 60,000 and the chlorine content of 15% by weight.

### [Production Example 3: Acid-Modified Polyolefin Resin (A-3)]

One hundred parts of the polyolefin resin (propylene-based random copolymer with the propylene component unit content of 96% by weight and the ethylene component unit content of 4% by weight) produced using a metallocene catalyst as the polymerization catalyst, 4 parts of maleic anhydride (α,β-unsaturated carboxylic anhydride), and 2 parts of di-tert-butyl peroxide (radical reaction initiator) were uniformly mixed and fed into a twin-screw extruder (L/D = 60, diameter = 15 mm, the first barrel to the fourteenth barrels).

The reaction was carried out with the residence time of 10 min, the rotation speed of 200 rpm, and the barrel temperature of 100°C (the first and second barrels), 200°C (the third to eighth barrels), 90°C (the ninth and tenth barrels), and 110°C (the eleventh to fourteenth barrels). Then, unreacted maleic anhydride was removed under reduced pressure to obtain an acid-modified polyolefin resin (A-3) modified with maleic anhydride.

The acid-modified polyolefin resin (A-3) thus obtained had the weight-average molecular weight of 60,000 and the degree of modification by maleic anhydride of 2.5% by weight.

### [Production Example 4: Acid-modified Chlorinated Polyolefin Resin (A-4)]

One hundred parts of the polyolefin resin (propylene-based random copolymer with the propylene component unit content of 96% by weight and the ethylene component unit content of 4% by weight) produced using a metallocene catalyst as the polymerization catalyst, 4 parts of maleic anhydride (α,β-unsaturated carboxylic anhydride), and 2 parts of di-tert-butyl peroxide (radical reaction initiator) were uniformly mixed and fed into a twin-screw extruder (L/D = 60, diameter = 15 mm, the first barrel to the fourteenth barrels).

The reaction was carried out with the residence time of 10 min, the rotation speed of 200 rpm, and the barrel temperature of 100°C (the first and second barrels), 200°C (the third to eighth barrels), 90°C (the ninth and tenth barrels), and 110°C (the eleventh to fourteenth barrels). Then, the unreacted maleic anhydride was removed under reduced pressure to obtain an acid-modified polyolefin resin modified with maleic anhydride.

One hundred parts of the acid-modified polyolefin resin was fed into a glass-lined reaction vessel. Chloroform was added, and the resin was thoroughly dissolved at the temperature of 110°C and the pressure of 2 kgf/m²; then, 2 parts of 2,2-azobisisobutyronitrile (radical reaction initiator) was added. The chlorination was carried out by blowing a chlorine gas while controlling the pressure inside the vessel at 3 kgf/cm².

After the reaction, 6 parts of an epoxy compound (Epocizer W-100EL, DIC Corporation) was added as the stabilizer, and then, the resulting mixture was fed to a vented extruder equipped with a solvent-removing suction unit at the screw shaft portion to remove the solvent and solidify to obtain the acid-modified chlorinated polyolefin resin (A-4). The acid-modified chlorinated polyolefin resin (A-4) thus obtained had the weight-average molecular weight of 60,000, the degree of modification with maleic anhydride of 2.5% by weight, and the chlorine content of 25% by weight.

### [Production Example 5: Acid-modified Chlorinated Polyolefin Resin (A-5)]

One hundred parts of the polyolefin resin (propylene-based random copolymer with the propylene component unit content of 96% by weight and the ethylene component unit content of 4% by weight) produced using a metallocene catalyst as the polymerization catalyst, 4 parts of maleic anhydride (α,β-unsaturated carboxylic anhydride), and 2 parts of di-tert-butyl peroxide (radical reaction initiator) were uniformly mixed and fed into a twin-screw extruder (L/D = 60, diameter = 15 mm, the first barrel to the fourteenth barrels).

The reaction was carried out with the residence time of 10 min, the rotation speed of 200 rpm, and the barrel temperature of 100°C (the first and second barrels), 200°C (the third to eighth barrels), 90°C (the ninth and tenth barrels), and 110°C (the eleventh to fourteenth barrels). Then, the unreacted maleic anhydride was removed under reduced pressure to obtain an acid-modified polypropylene resin modified with maleic anhydride.

One hundred parts of the acid-modified polypropylene resin was fed into a glass-lined reaction vessel. Chloroform was added, and the resin was thoroughly dissolved at the temperature of 110°C and the pressure of 2 kgf/m²; then, 2 parts of 2,2-azobisisobutyronitrile (radical reaction initiator) was added. The chlorination was carried out by blowing a chlorine gas while controlling the pressure inside the vessel at 2 kgf/cm².

After the reaction, 6 parts of an epoxy compound (Epocizer W-100EL, manufactured by DIC Corp.) was added as the stabilizer, and then, the resulting mixture was fed to a vented extruder equipped with a solvent-removing suction unit at the screw shaft portion to remove the solvent and solidify to obtain the acid-modified chlorinated polyolefin resin (A-5). The acid-modified chlorinated polyolefin resin (A-5) thus obtained had the weight-average molecular weight of 110,000, the degree of modification with maleic anhydride of 2.0% by weight, and the chlorine content of 17% by weight.

### [Production Example 6: Acid-modified Chlorinated Polyolefin Resin (A-6)]

One hundred parts of the polyolefin resin (propylene-based random copolymer with the propylene component unit content of 96% by weight and the ethylene component unit content of 4% by weight) produced using a metallocene catalyst as the polymerization catalyst, 4 parts of maleic anhydride (α,β-unsaturated carboxylic anhydride), and 2 parts of di-tert-butyl peroxide (radical reaction initiator) were uniformly mixed and fed into a twin-screw extruder (L/D = 60, diameter = 15 mm, the first barrel to the fourteenth barrels).

The reaction was carried out with the residence time of 10 min, the rotation speed of 200 rpm, and the barrel temperature of 100°C (the first and second barrels), 200°C (the third to eighth barrels), 90°C (the ninth and tenth barrels), and 110°C (the eleventh to fourteenth barrels). Then, the unreacted maleic anhydride was removed under reduced pressure to obtain an acid-modified polypropylene resin modified with maleic anhydride.

One hundred parts of the acid-modified polypropylene resin was fed into a glass-lined reaction vessel. Chloroform was added, and the resin was thoroughly dissolved at the temperature of 110°C and the pressure of 2 kgf/m²; then, 2 parts of 2,2-azobisisobutyronitrile (radical reaction initiator) was added. The chlorination was carried out by blowing a chlorine gas while controlling the pressure inside the vessel at 2 kgf/cm².

After the reaction, 6 parts of an epoxy compound (Epocizer W-100EL, manufactured by DIC Corp.) was added as the stabilizer, and then, the resulting mixture was fed to a vented extruder equipped with a solvent-removing suction unit at the screw shaft portion to remove the solvent and solidify to obtain the acid-modified chlorinated polyolefin resin (A-6). The acid-modified chlorinated polyolefin resin (A-6) thus obtained had the weight-average molecular weight of 60,000, the degree of modification with maleic anhydride of 2.5% by weight, and the chlorine content of 24.5% by weight.

### [Example 1: Production of Dispersion Composition (B-1)]

One hundred parts of the acid-modified chlorinated polyolefin resin (A-1) was dissolved in 264.1 parts of methylcyclohexane (aliphatic hydrocarbon solvent); and then, 1.0 part of an epoxy compound (Epocizer W-131, manufactured by DIC Corp., 1.0% by weight to the acid-modified chlorinated polyolefin resin (A-1)) was added.

Under a nitrogen atmosphere at 85°C, 5.0 parts of Niper BMT-K40 (manufactured by Nippon Oil & Fats Co., Ltd.) (radical reaction initiator) was added with stirring (3.2% by weight to the (meth)acrylic acid component to be described below). After one hour of holding, a mixed solution ((meth)acrylic acid component) of 3.8 parts of methacrylic acid, 28.1 parts of methyl methacrylate, 28.1 parts of cyclohexyl methacrylate, 46.9 parts of n-butyl methacrylate, 35.6 parts of 2-methoxyethyl acrylate, and 7.5 parts of 2-hydroxyethyl acrylate was continuously added over 3 hours; then, the resulting mixture was held at 85°C for 6 hours to obtain the modified polyolefin resin with the molecular weight of 80,000.

After the reaction was completed, 100 parts of the reaction solution was concentrated under reduced pressure at 90°C by distilling out 37.6 parts of methylcyclohexane (aliphatic hydrocarbon solvent) with stirring; and then, 57.6 parts of isopropanol (alcohol solvent) was added over about 2 hours with stirring at 70°C to obtain the dispersion composition (B-1) of the modified polyolefin resin.

### [Example 2: Production of Dispersion Composition (B-2)]

The modification and dispersion were carried out in the same manner as in Example 1, except that the mixture of the (meth)acrylic acid components relative to 100 parts of the acid-modified chlorinated polyolefin resin (A-1) was changed to the mixture of 3.8 parts of methacrylic acid, 13.1 parts of methyl methacrylate, 28.1 parts of cyclohexyl methacrylate, 46.9 parts of n-butyl methacrylate, 35.6 parts of 2-methoxyethyl acrylate, and 22.5 parts of 2-hydroxyethyl acrylate to obtain the dispersion composition (B-2).

### [Example 3: Production of Dispersion Composition (B-3)]

The modification and dispersion were carried out in the same manner as in Example 1, except that the mixture of the (meth)acrylic acid components relative to 100 parts of the acid-modified chlorinated polyolefin resin (A-1) was changed to the mixture of 3.8 parts of methacrylic acid, 33.6 parts of methyl methacrylate, 28.1 parts of cyclohexyl methacrylate, 46.9 parts of n-butyl methacrylate, 35.6 parts of 2-methoxyethyl acrylate, and 2.0 parts of 2-hydroxyethyl acrylate to obtain the dispersion composition (B-3).

### [Example 4: Production of Dispersion Composition (B-4)]

The modification and dispersion were carried out in the same manner as in Example 1, except that the mixture of the (meth)acrylic acid components relative to 100 parts of the acid-modified chlorinated polyolefin resin (A-1) was changed to the mixture of 3.8 parts of methacrylic acid, 13.1 parts of methyl methacrylate, 73.1 parts of cyclohexyl methacrylate, 46.9 parts of n-butyl methacrylate, 5.6 parts of 2-methoxyethyl acrylate, and 7.5 parts of 2-hydroxyethyl acrylate to obtain the dispersion composition (B-4).

### [Example 5: Production of Dispersion Composition (B-5)]

The modification and dispersion were carried out in the same manner as in Example 1, except that the mixture of the (meth)acrylic acid components relative to 100 parts of the acid-modified chlorinated polyolefin resin (A-1) was changed to the mixture of 3.8 parts of methacrylic acid, 58.1 parts of methyl methacrylate, 8.1 parts of cyclohexyl methacrylate, 36.9 parts of n-butyl methacrylate, 35.6 parts of 2-methoxyethyl acrylate, and 7.5 parts of 2-hydroxyethyl acrylate to obtain the dispersion composition (B-5).

### [Example 6: Production of Dispersion Composition (B-6)]

The modification and dispersion were carried out in the same manner as in Example 1, except that the mixture of the (meth)acrylic acid components relative to 100 parts of the acid-modified chlorinated polyolefin resin (A-1) was changed to the mixture of 3.8 parts of methacrylic acid, 13.1 parts of methyl methacrylate, 28.1 parts of cyclohexyl methacrylate, 46.9 parts of n-butyl methacrylate, 20.6 parts of 2-methoxyethyl acrylate, and 22.5 parts of 2-hydroxyethyl acrylate to obtain the dispersion composition (B-6).

### [Example 7: Production of Dispersion Composition (B-7)]

The modification and dispersion were carried out in the same manner as in Example 1, except that the amount of the (meth)acrylic acid component fed to the acid-modified chlorinated polyolefin resin (A-1) was changed so as to give the ratio, acid-modified chlorinated polyolefin resin (A-1)/(meth)acrylic acid component = 95/5 (mass ratio), to obtain the dispersion composition (B-7).

### [Example 8: Production of Dispersion Composition (B-8)]

The modification and dispersion were carried out in the same manner as in Example 1, except that the amount of the (meth)acrylic acid component fed to the acid-modified chlorinated polyolefin resin (A-1) was changed so as to give the ratio, acid modified chlorinated polyolefin resin (A-1)/(meth)acrylic acid component = 10/90 (mass ratio), to obtain the dispersion composition (B-8).

### [Example 9: Production of Dispersion Composition (B-9)]

The modification and dispersion were carried out in the same manner as in Example 1, except that the amount of the (meth)acrylic acid component fed to the acid-modified chlorinated polyolefin resin (A-1) was changed so as to give the ratio, acid modified chlorinated polyolefin resin (A-1)/(meth)acrylic acid component = 80/20 (mass ratio), to obtain the dispersion composition (B-9).

### [Example 10: Production of Dispersion Composition (B-10)]

The modification and dispersion were carried out in the same manner as in Example 1, except that the amount of the (meth)acrylic acid component fed to the acid-modified chlorinated polyolefin resin (A-1) was changed so as to give the ratio, acid modified chlorinated polyolefin resin (A-1)/(meth)acrylic acid component = 60/40 (mass ratio), to obtain the dispersion composition (B-10).

### [Example 11: Production of Dispersion Composition (B-11)]

The modification and dispersion were carried out in the same manner as in Example 1, except that the amounts of methylcyclohexane (aliphatic hydrocarbon solvent) to be removed under reduced pressure and of isopropanol (alcohol solvent) to be added were changed, while keeping the final solvent ratio without change, so as to give the final solid content of 30% by weight relative to 100 parts of the reaction solution after completion of the reaction to obtain the dispersion composition (B-11).

### [Example 12: Production of Dispersion Composition (B-12)]

The modification and dispersion were carried out in the same manner as in Example 1, except that the chlorinated polyolefin resin (A-2) was used in place of the acid-modified chlorinated polyolefin resin (A-1) to obtain the dispersion composition (B-12).

### [Example 13: Production of Dispersion Composition (B-13)]

The modification and dispersion were carried out in the same manner as in Example 1, except that the acid-modified polyolefin resin (A-3) was used in place of the acid-modified chlorinated polyolefin resin (A-1) to obtain the dispersion composition (B-13).

### [Example 14: Production of Dispersion Composition (B-14)]

The modification and dispersion were carried out in the same manner as in Example 1, except that the acid-modified chlorinated polyolefin resin (A-4) was used in place of the acid-modified chlorinated polyolefin resin (A-1) to obtain the dispersion composition (B-14).

### [Example 15: Production of Dispersion Composition (B-15)]

The modification and dispersion were carried out in the same manner as in Example 1, except that the addition amount of the radical reaction initiator (Niper BMT-K40 (manufactured by Nippon Oil & Fats Co., Ltd.)) was changed to 0.5% by weight relative to the amount of the (meth)acrylic acid component to obtain the dispersion composition (B-15).

### [Example 16: Production of Dispersion Composition (B-16)]

The modification and dispersion were carried out in the same manner as in Example 1, except that the addition amount of the radical reaction initiator (Niper BMT-K40 (manufactured by Nippon Oil & Fats Co., Ltd.)) was changed to 6.4% by weight relative to the amount of the (meth)acrylic acid component to obtain the dispersion composition (B-16).

### [Example 17: Production of Dispersion Composition (B-17)]

The modification and dispersion were carried out in the same manner as in Example 1, except that the acid-modified chlorinated polyolefin resin (A-5) was used in place of the acid-modified chlorinated polyolefin resin (A-1), and that the mixture of the (meth)acrylic acid components relative to 100 parts of the acid-modified chlorinated polyolefin resin (A-5) was changed to the mixture of 3.8 parts of methacrylic acid, 30.0 parts of methyl methacrylate, 28.1 parts of cyclohexyl methacrylate, 47.0 parts of n-butyl methacrylate, 35.7 parts of 2-methoxyethyl acrylate, and 5.6 parts of 2-hydroxyethyl acrylate, and n-butyl alcohol (alcohol solvent) was used in place of isopropanol (alcohol solvent), to obtain the dispersion composition (B-17).

### [Example 18: Production of Dispersion Composition (B-18)]

The modification and dispersion were carried out in the same manner as in Example 1, except that the acid-modified chlorinated polyolefin resin (A-6) was used in place of the acid-modified chlorinated polyolefin resin (A-1), and that the mixture of the (meth)acrylic acid components relative to 100 parts of the acid-modified chlorinated polyolefin resin (A-6) was changed to the mixture of 3.8 parts of methacrylic acid, 30.0 parts of methyl methacrylate, 28.1 parts of cyclohexyl methacrylate, 47.0 parts of n-butyl methacrylate, 35.7 parts of 2-methoxyethyl acrylate, and 5.6 parts of 2-hydroxyethyl acrylate, and n-butyl alcohol (alcohol solvent) was used in place of isopropanol (alcohol solvent), to obtain the dispersion composition (B-18).

### [Example 19: Production of Dispersion Composition (B-19)]

The modification and dispersion were carried out in the same manner as in Example 1, except that the acid-modified chlorinated polyolefin resin (A-5) was used in place of the acid-modified chlorinated polyolefin resin (A-1), and that the mixture of the (meth)acrylic acid components relative to 100 parts of the acid-modified chlorinated polyolefin resin (A-5) was changed to the mixture of 3.8 parts of methacrylic acid, 30.0 parts of methyl methacrylate, 28.1 parts of cyclohexyl methacrylate, 47.0 parts of n-butyl methacrylate, 35.7 parts of 2-methoxyethyl acrylate, and 5.6 parts of 2-hydroxyethyl acrylate, and neoethanol PIP (mixed solution of ethanol, isopropyl alcohol, and n-propyl alcohol) (alcohol solvent) was used in place of isopropanol (alcohol solvent), to obtain the dispersion composition (B-19).

### [Example 20: Production of Dispersion Composition (B-20)]

The modification and dispersion were carried out in the same manner as in Example 1, except that the acid-modified chlorinated polyolefin resin (A-6) was used in place of the acid-modified chlorinated polyolefin resin (A-1), and that the mixture of the (meth)acrylic acid components relative to 100 parts of the acid-modified chlorinated polyolefin resin (A-6) was changed to the mixture of 3.8 parts of methacrylic acid, 30.0 parts of methyl methacrylate, 28.1 parts of cyclohexyl methacrylate, 47.0 parts of n-butyl methacrylate, 35.7 parts of 2-methoxyethyl acrylate, and 5.6 parts of 2-hydroxyethyl acrylate, and neoethanol PIP (alcohol solvent) was used in place of isopropanol (alcohol solvent), to obtain the dispersion composition (B-20).

### [Comparative Example 1: Production of Dispersion Composition (B-1')]

One hundred parts of the acid-modified chlorinated polyolefin resin (A-1) was dissolved in 108 parts of methylcyclohexane (aliphatic hydrocarbon solvent), and then, 1.0 part of an epoxy compound (Epocizer W-131, manufactured by DIC Corp.) was added so as to be 1.0% by weight relative to the polyolefin resin (A).

One hundred parts of the resulting resin solution was concentrated under reduced pressure at 90°C by distilling out 37.6 parts of methylcyclohexane (aliphatic hydrocarbon solvent) with stirring; and then, 57.6 parts of isopropanol (alcohol solvent) was added over about 2 hours with stirring at 70°C. The resin component did not disperse, so that the dispersion composition (B-1') could not be obtained.

### [Comparative Example 2: Production of Dispersion Composition (B-2')]

The modification and dispersion were carried out in the same manner as in Example 1, except that the mixture of the (meth)acrylic acid components relative to 100 parts of the acid-modified chlorinated polyolefin resin (A-1) was changed to the mixture of 3.8 parts of methacrylic acid, 35.6 parts of methyl methacrylate, 28.1 parts of cyclohexyl methacrylate, 46.9 parts of n-butyl methacrylate, and 35.6 parts of 2-methoxyethyl acrylate. The resin component did not disperse, so that the dispersion composition (B-2') could not be obtained.

### [Comparative Example 3: Production of Dispersion Composition (B-3')]

The modification and dispersion were carried out in the same manner as in Example 1, except that the mixture of the (meth)acrylic acid components relative to 100 parts of the acid-modified chlorinated polyolefin resin (A-1) was changed to the mixture of 3.8 parts of methacrylic acid, 56.2 parts of methyl methacrylate, 82.5 parts of 2-methoxyethyl acrylate, and 7.5 parts of 2-hydroxyethyl acrylate. The resin component did not disperse, so that the dispersion composition (B-3') could not be obtained.

### [Comparative Example 4: Production of Dispersion Composition (B-4')]

The modification and dispersion were carried out in the same manner as in Example 1, except that the amount of the (meth)acrylic acid component fed to 100 parts of the acid-modified chlorinated polyolefin resin (A-1) was changed so as to give the ratio, acid modified chlorinated polyolefin resin (A-1)/(meth)acrylic acid component = 5/95 (mass ratio), to obtain the dispersion composition (B-4').

### [Comparative Example 5: Production of Dispersion Composition (B-5')]

The resin solution after having been modified with the (meth)acrylic acid component in the same manner as in Example 1 was solidified in an extruder; then, 150 parts of isopropanol (alcohol solvent) was added to 100 parts of the solid resin with stirring at 90°C over 2 hours. The resin component did not disperse, so that the dispersion composition (B-5') could not be obtained.

### [Comparative Example 6: Production of Dispersion Composition (B-6')]

The modification and dispersion were carried out in the same manner as in Example 1, except that the methylcyclohexane (aliphatic hydrocarbon solvent) fed to 100 parts of the acid-modified chlorinated polyolefin resin (A-1) was changed to n-butyl acetate. The resin component once dispersed deposited, so that the dispersion composition (B-6') could not be obtained.

### [Comparative Example 7: Production of Dispersion Composition (B-7')]

The modification and dispersion were carried out in the same manner as in Example 1, except that the amounts of methylcyclohexane (aliphatic hydrocarbon solvent) to be removed under reduced pressure and of isopropanol (alcohol solvent) to be added were changed, while keeping the final solvent ratio without change, so as to give the final solid content of 29% by weight relative to 100 parts of the reaction solution after completion of reaction to obtain the dispersion composition (B-7').

### [Evaluation Methods]

### (Weight-average Molecular Weight (Mw))

The weight-average molecular weight was measured by GPC with the following conditions.
Instrument: HLC-8320GPC (manufactured by Tosoh Corp.)
Columns: TSK-gel G-6000 HXL, G-5000 HXL, G-4000 HXL, G-3000 HXL, and G-2000 HXL (manufactured by Tosoh Corporation)
Eluent: THF
Flow rate: 1 mL/min
Temperature: Pump oven and column oven at 40°C
Injection volume: 100 µL
Standard substance: Polystyrene EasiCal PS-1 (manufactured by Agilent Technologies Japan Ltd.)

### (Grafting Weight of Maleic Anhydride (Degree of Modification) (% by weight))

This was measured by the alkali titration method in accordance with JIS K 0070.

### (Degree of Chlorination (Chlorine Content) (% by weight))

This was measured in accordance with JIS-K7229.

### (Dispersibility)

This was evaluated by the viscosity of the dispersion and the appearance of the solution during preparation. The viscosity of the dispersion in a glass bottle was measured with a B-type viscometer after this bottle was immersed in a constant temperature bath at 25°C at least for 6 hours.
A: The dispersion is uniform and milky white with the B-type viscosity of 400 mPa·s or less.
B: The dispersion is uniform and milky white with the B-type viscosity of more than 400 mPa·s to 700 mPa·s or less.
C: The dispersion is uniform and milky white with the B-type viscosity of more than 700 mPa·s to 1200 mPa·s or less.
D: Precipitation occurs immediately after the dispersion is prepared, or the resin component is not dispersed in the dispersing medium, or the B-type viscosity of the obtained dispersion is more than 1200 mPa·s.

### (Temporal Change in Stability)

The stability of 150 g of the resin dispersion in a 250 ml glass container was evaluated visually after this was allowed to statically stand at room temperature for a predetermined period of time.
A: Excellent stability with no sedimentation even after standing for more than 3 months.
B: No sedimentation after standing for more than 3 months with some thickening, but this is still within a practical range.
C: Slight sedimentation is observed after 1 to 2 months, but this is still within a practical range.
D: Sedimentation is seen within one month and is not suitable for a practical use.

### (Adhesion Test)

Linear notches were made horizontally and vertically on the coating film of the test specimen at 1 mm intervals so as to reach the substrate to create 100 compartments (square grid); then, a cellophane adhesive tape was adhered on to the square grid and pulled off to a 180° direction. The cellophane adhesive tape was adhered and pulled off 10 times to the identical 100 compartments, and the adhesion (bonding) was evaluated based on the following criteria. When 50 or less compartments are peeled from the coating film (rating A to C), usually there is no practical problem.
A: There is no peeling of the coating film.
B: The number of the peeled compartments from the coating film is 1 or more to 10 or less.
C: The number of the peeled compartments from the coating film is more than 10 to 50 or less.
D: The number of the peeled compartments from the coating film is more than 50.

### (Gasohol Resistance Test)

The test specimen was immersed in regular gasoline/ethanol = 9/1 (v/v) for 120 minutes; then, the condition of the coating was observed to evaluate the gasohol resistance in accordance with the following criteria. When no peeling occurred on the surface of the coating (conditions A to C), usually there is no practical problem.
A: There is no change in the surface of the coating film.
B: Slight change is observed on the surface of the coating film, but no peeling is observed.
C: Changes are observed on the surface of the coating film, but no peeling is observed.
D: Delamination can be seen on the surface of the coating film.

The weight-average molecular weights of the modified polyolefin resins, the solvents in the dispersing medium, the total contents of the structure derived from the (meth)acrylic acid component, the solid fractions, and the evaluation results and viscosities of Examples and Comparative Examples are summarized in Table 1 below.

### [Table 1]

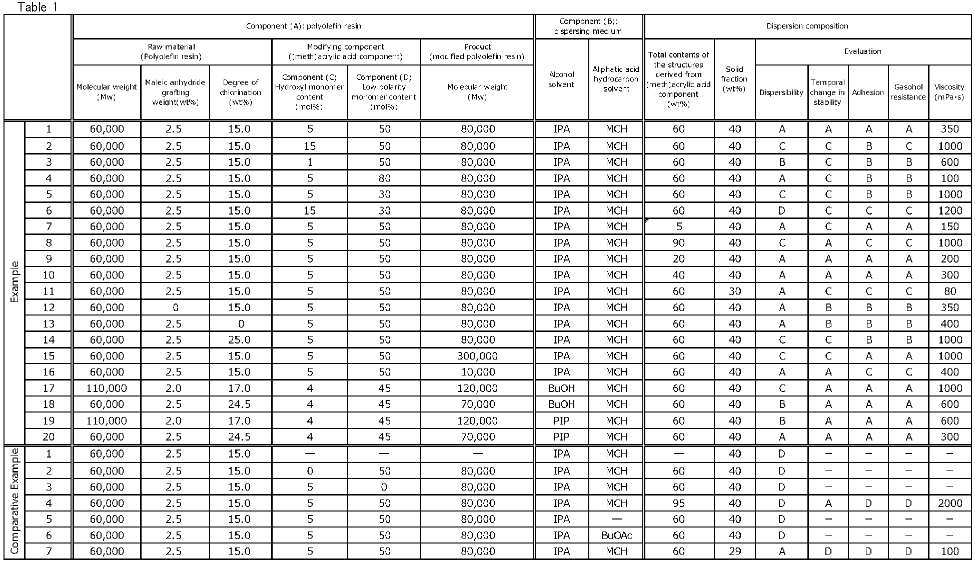

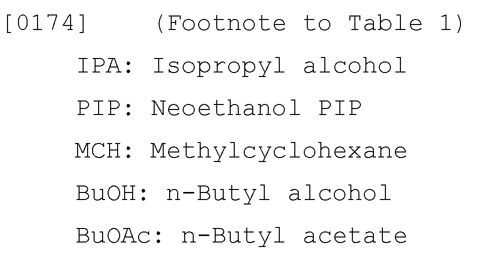

From the above results, it can be seen the following. In Comparative Example 5, where the aliphatic hydrocarbon solvent was used as the dispersing medium without the alcohol solvent, the resin component did not disperse, so that the dispersion composition could not be obtained. In Comparative Example 6, where butyl acetate was used in place of the aliphatic hydrocarbon solvent, the resin component once dispersed deposited, so that the alcohol dispersion could not be obtained. On the other hand, in each of Examples 1 to 20, where the aliphatic hydrocarbon solvent and the alcohol solvent were used as the solvent and the prescribed modified polyolefin resin was adjusted to the prescribed solid content ratio, the dispersion composition having well-balanced evaluation results could be obtained as compared to the respective Comparative Examples. From the above results, it became clear that the dispersion composition according to the present invention exhibits a moderate viscosity even with a high solid content, as well as superior stability and adhesion.

## Claims

1. A dispersion composition comprising at least:
a component (A): a modified polyolefin resin, and
a component (B): a dispersing medium containing an alcohol solvent and an aliphatic hydrocarbon solvent;
wherein:
the component (A) is dispersed in the component (B);
the component (A) is modified by a (meth)acrylic acid component containing at least
a component (C): a (meth)acrylate ester represented by the following general formula (I):
CH₂=C(R¹)COOR² (I)
(in the general formula (I), R¹ represents a hydrogen atom or a methyl group; and R² represents -CₘH₂ₘOH, where m represents an integer of 1 to 18), and
a component (D): a (meth)acrylic ester represented by the following general formula (II):
CH₂=C(R³)COOR⁴ (II)
(in the general formula (II), R³ represents a hydrogen atom or a methyl group; and R⁴ represents a linear, a branched and/or a cyclic alkyl group having 4 to 18 carbon atoms); and
a total content of a structure derived from the (meth)acrylic acid component in the dispersion composition is 3% to 94% by weight relative to 100% by weight as a total amount of the component (A) and (meth)acrylic acid component polymer;
a solid fraction in the dispersion composition is 30% to 80% by weight;
the total content of the alcohol solvent and the aliphatic hydrocarbon solvent in the dispersing medium is 80% or more by weight; and
the content ratio (mass ratio) of the alcohol solvent to the aliphatic hydrocarbon solvent is in the range of 99/1 to 10/90.

2. The dispersion composition according to claim **1,** wherein the content of a structure derived from the component (C) in the component (A) is 20% or less by mole relative to 100% by mole as the total content of the structure derived from the (meth)acrylic acid component.

3. The dispersion composition according to claim 1 or **2,** wherein the content of a structure derived from the component (D) in the component (A) is 25% or more by mole relative to 100% by mole as the total content of the structure derived from the (meth)acrylic acid component.

4. The dispersion composition according to any one of claims 1 to **3,** wherein a weight-average molecular weight of the component (A) is 5,000 to 400,000.

5. The dispersion composition according to any one of claims 1 to **4,** wherein the component (A) is further modified with an acid component other than the (meth)acrylic acid component.

6. The dispersion composition according to any one of claims 1 to **5,** wherein the component (A) is further chlorinated.

7. The dispersion composition according to claim **6,** wherein a degree of chlorination of the component (A) is 30% or less by weight relative to 100% by weight as a weight of the component (A) excluding a weight derived from the (meth)acrylic acid component.

8. A primer comprising the dispersion composition according to any one of claims 1 to 7.

9. An adhesive comprising the dispersion composition according to any one of claims 1 to 7.

10. A binder for a paint, the binder comprising the dispersion composition according to any one of claims 1 to 7.

11. A binder for an ink, the binder comprising the dispersion composition according to any one of claims 1 to 7.

## Patentansprüche

1. Dispersionszusammensetzung, umfassend mindestens:
einen Bestandteil (A): ein modifiziertes Polyolefinharz, und
einen Bestandteil (B): ein Dispergiermedium, das ein Alkohollösungsmittel und ein aliphatisches Kohlenwasserstofflösungsmittel enthält; wobei:
der Bestandteil (A) in dem Bestandteil (B) dispergiert ist;
der Bestandteil (A) durch einen (Meth)acrylsäurebestandteil modifiziert ist, der mindestens
einen Bestandteil (C): einen (Meth)acrylatester, der durch die folgende allgemeine Formel (I) dargestellt ist:
CH₂=C(R¹)COOR² (I)
(in der allgemeinen Formel (I) stellt R¹ ein Wasserstoffatom oder eine Methygruppe dar; und R² stellt -CₘH₂ₘOH dar, wobei m eine ganze Zahl von 1 bis 18 darstellt), und
einen Bestandteil (D): einen (Meth)acrylsäureester, der durch die folgende allgemeine Formel (II) dargestellt ist:
CH₂=C(R³)COOR⁴ (II)
(in der allgemeinen Formel (II) stellt R³ ein Wasserstoffatom oder eine Methygruppe dar; und R⁴ stellt eine unverzweigte, eine verzweigte und/oder eine cyclische Alkylgruppe mit 4 bis 18 Kohlenstoffatomen dar), enthält; und
ein Gesamtgehalt einer Struktur, die von dem (Meth)acrylsäurebestandteil abgeleitet ist, in der Dispersionszusammensetzung 3 bis 94 Gew.-% bezogen auf 100 Gew.-% als Gesamtmenge des Bestandteils (A) und des (Meth)acrylsäurebestandteil-Polymers beträgt;
ein Feststoffanteil in der Dispersionszusammensetzung 30 bis 80 Gew.-% beträgt;
der Gesamtgehalt des Alkohollösungsmittels und des aliphatischen Kohlenwasserstofflösungsmittels in dem Dispergiermedium 80 Gew.-% oder mehr beträgt; und
das Gehaltverhältnis (Massenverhältnis) des Alkohollösungsmittels zu dem aliphatischen Kohlenwasserstofflösungsmittel im Bereich von 99/1 bis 10/90 liegt.

2. Dispersionszusammensetzung nach Anspruch 1, wobei der Gehalt einer Struktur, die von dem Bestandteil (C) abgeleitet ist, in dem Bestandteil (A) 20 Mol-% oder weniger bezogen auf 100 Mol-% als Gesamtgehalt der Struktur, die von dem (Meth)acrylsäurebestandteil abgeleitet ist, beträgt.

3. Dispersionszusammensetzung nach Anspruch 1 oder 2, wobei der Gehalt einer Struktur, die von dem Bestandteil (D) abgeleitet ist, in dem Bestandteil (A) 25 Mol-% oder mehr bezogen auf 100 Mol-% als Gesamtgehalt der Struktur, die von dem (Meth)acrylsäurebestandteil abgeleitet ist, beträgt.

4. Dispersionszusammensetzung nach einem der Ansprüche 1 bis 3, wobei ein Gewichtsmittel des Molekulargewichts des Bestandteil (A) 5000 bis 400000 beträgt.

5. Dispersionszusammensetzung nach einem der Ansprüche 1 bis 4, wobei der Bestandteil (A) ferner mit einem Säurebestandteil modifiziert ist, der von dem (Meth)acrylsäurebestandteil verschieden ist.

6. Dispersionszusammensetzung nach einem der Ansprüche 1 bis 5, wobei der Bestandteil (A) ferner chloriert ist.

7. Dispersionszusammensetzung nach Anspruch 6, wobei ein Chlorierungsgrad des Bestandteils (A) 30 Gew.-% oder weniger bezogen auf 100 Gew.-% als Gewicht des Bestandteils (A), ausschließlich ein Gewicht, das von dem (Meth)acrylsäurebestandteil stammt, beträgt.

8. Haftvermittler, der die Dispersionszusammensetzung nach einem der Ansprüche 1 bis 7 umfasst.

9. Haftmittel, das die Dispersionszusammensetzung nach einem der Ansprüche 1 bis 7 umfasst.

10. Bindemittel für ein Anstrichmittel, wobei das Bindemittel die Dispersionszusammensetzung nach einem der Ansprüche 1 bis 7 umfasst.

11. Bindemittel für eine Tinte bzw. Druckfarbe, wobei das Bindemittel die Dispersionszusammensetzung nach einem der Ansprüche 1 bis 7 umfasst.

## Revendications

1. Composition de dispersion comprenant au moins :
un composant (A) : une résine de polyoléfine modifiée, et
un composant (B) : un milieu de dispersion contenant un solvant alcoolique et un solvant d'hydrocarbure aliphatique ; dans laquelle :
le composant (A) est dispersé dans le composant (B) ;
le composant (A) est modifié par un composant d'acide (méth)acrylique contenant au moins
un composant (C) : un ester (méth)acrylique représenté par la formule générale suivante (I) :
CH₂=C(R¹)COOR² (I)
(dans la formule générale (I), R¹ représente un atome d'hydrogène ou un groupe méthyle ; et R² représente -CₘH₂ₘOH, où m représente un entier de 1 à 18), et
un composant (D) : un ester (méth)acrylique représenté par la formule générale suivante (II) :
CH₂=C(R³)COOR⁴ (II)
(dans la formule générale (II), R³ représente un atome d'hydrogène ou un groupe méthyle ; et R⁴ représente un groupe alkyle linéaire, ramifié et/ou cyclique ayant 4 à 18 atomes de carbone) ; et
une teneur totale en une structure dérivée du composant d'acide (méth)acrylique dans la composition de dispersion est de 3 % à 94 % en poids par rapport à 100 % en poids en tant que quantité totale du composant (A) et du polymère à composant d'acide (méth)acrylique ;
une fraction solide dans la composition de dispersion est 30 % à 80 % en poids ;
la teneur totale en le solvant alcoolique et le solvant d'hydrocarbure aliphatique dans le milieu de dispersion est de 80 % en poids ou plus ; et
le rapport de teneur (rapport massique) du solvant alcoolique sur le solvant d'hydrocarbure aliphatique est dans la plage de 99/1 à 10/90.

2. Composition de dispersion selon la revendication 1, dans laquelle la teneur en une structure dérivée du composant (C) dans le composant (A) est de 20 % en mole ou moins par rapport à 100 % en mole en tant que teneur totale en la structure dérivée du composant d'acide (méth)acrylique.

3. Composition de dispersion selon la revendication 1 ou 2, dans laquelle la teneur en une structure dérivée du composant (D) dans le composant (A) est de 25 % en mole ou plus par rapport à 100 % en mole en tant que teneur totale en la structure dérivée du composant d'acide (méth)acrylique.

4. Composition de dispersion selon l'une quelconque des revendications 1 à 3, dans laquelle un poids moléculaire moyen en poids du composant (A) est de 5000 à 400 000.

5. Composition de dispersion selon l'une quelconque des revendications 1 à 4, dans laquelle le composant (A) est en outre modifié avec un composant acide autre que le composant d'acide (méth)acrylique.

6. Composition de dispersion selon l'une quelconque des revendications 1 à 5, dans laquelle le composant (A) est en outre chloré.

7. Composition de dispersion selon la revendication 6, dans laquelle un degré de chloration du composant (A) est de 30 % en poids ou moins par rapport à 100 % en poids en tant que poids du composant (A) excluant un poids dérivé du composant d'acide (méth)acrylique.

8. Couche primaire comprenant la composition de dispersion selon l'une quelconque des revendications 1 à 7.

9. Adhésif comprenant la composition de dispersion selon l'une quelconque des revendications 1 à 7.

10. Liant pour une peinture, le liant comprenant la composition de dispersion selon l'une quelconque des revendications 1 à 7.

11. Liant pour une encre, le liant comprenant la composition de dispersion selon l'une quelconque des revendications 1 à 7.
